# EUROPEAN PATENT SPECIFICATION

(11) **EP 1 161 021 B1**
(45) Date of publication and mention of the grant of the patent: **10.12.2008**
(21) Application number: 00111076.6
(22) Date of filing: 02.06.2000
(51) Int. Cl.: H04L 1/08, G08G 1/09, H04H 1/00

(54) **A method and apparatus for processing cyclus-organized data messages**
Verfahren und Einrichtung zur Bearbeitung von zyklusstruktierten Datennachrichten
Procédé et appareil pour le traitement de messages de données cycliques

(43) Date of publication of application: 05.12.2001
(73) Proprietor: Continental Automotive GmbH, 30165 Hannover (DE)
(72) Inventor: Völkel, Andreas, 35619 Braunfels (DE)

(56) References cited:
- US-A- 4 907 159
- US-A- 5 426 653
- US-A- 5 805 980
- DAVIES P. ET AL: 'The Radio System-Traffic Channel' VEHICLE NAVIGATION AND INFORMATION SYSTEMS CONFERENCE 11 September 1989 - 13 September 1989, IEEE, NEW YORK, NY, USA, pages A44 - A-48, XP010034419

## Description

The invention generally relates to the receiving of messages in a **R**adio **D**ata **S**ystem **T**raffic **M**essage **C**oding message environment. The messages are broadcast through various geographically distributed transmitter stations and may contain various information items to inform vehicles and their drivers within the transmission reach, of certain traffic conditions and related data that may be relevant for those receiver entities. A particular message format may contain an ***event*** (11 bits), a ***location*** (16 bits), a ***direction*** (1 bit), an ***extent*** (3 bits), a ***duration*** (3 bits), and a ***diversion advice*** (1bit), or 35 bits in total. To raise the probability for correct reception, each message is repeated three times in immediate succession, although for the present embodiment, this feature is not mandatory. Furthermore, at any time a particular transmitter may present a cyclus of various different messages which cyclus will be repeated as long as no change is required for the overall information. Inasmuch as the geographical area for which a particular message could be relevant will often outstretch the area that a particular transmitter may reach, the same message may be transmitted by many stations in parallel. However, there is no synchronization between the various transmitters, nor between a particular transmitter and a particular receiver, inasmuch as a receiver may dynamically switch between various stations, such as when seeking best reception quality. For brevity, error protectivity contained in the message packet, and the coding of the rank between the mutually corresponding and repeated messages within a single cycle will hereinafter be considered state of the art.

More in particular, the invention relates to a method for processing a cyclus of messages wherein each cyclus contains one or more data messages that may correspond to those contained in contiguous cycli, and each cycle contains one or more reference messages that refer to a conversion table for converting each message of a cycle to a respectively associated user signalization datum. The first problem in decoding the messages is effectively finding a message with sufficient reception quality. The next problem is to find out what the message actually means. Due to the extremely compact coding conventions, this second level needs a reference to a conversion table, which message however is being sent relatively infrequently.

US 4,907,159 discloses a device for receiving and processing road information messages transmitted in digital form. Each message includes at least a first section for indicating the zone of the road network to which the message refers. The device includes for the control of the data processing, a data processing unit which is connected to a bus for the transfer of data. A reception memory for temporarily storing the received messages is also connected to the bus. A selection unit enables the selection from among the stored messages of those concerning a zone to be designated. A presentation unit for presenting the selected messages is also connected to the bus. The device also includes a message analysis unit which includes a zone table memory. The analysis unit is provided for recognizing the zone in question each time a message is received on the basis of the said first section of the received message and for storing the zone's tables.

The inventor has recognized that waiting for the reference message and then only starting to wait for subsequent messages that should be decoded with the help of its conversion table, would effectively mean an enormous waste of time. It would be more advantageous if data messages that were reliable should be stored, even if conversion thereof would not yet be possible.
In consequence, amongst other things, it is an object of the present invention to allow transient storing of the data messages, in the anticipation of receiving the reference message in the near future for thereby allowing to convert the data messages. Now therefore, according to one of its aspects the invention is characterized by first ascertaining correct reception of a data message and then storing said message in transient storage facility means, furthermore upon correct reception of said reference message accessing said transient storage facility means for through said referred conversion table decoding all messages stored in said transient storage facility means, and finally thereafter decoding further data messages without waiting for a next said reference message.

Each region or country may use its own code table. This calls for flexibility in receiving and decoding data messages based on different code tables. In fact, repeated retuning should not defeat earlier messages if these could in fact have been taken from different cycli. Furthermore, various different cycli could in fact pertain to the same area but seen from different organizational or service aspects, such as weather conditions versus traffic jams. Also, different overall regions may yet share certain parts. Performance should be enhanced when a change in reception conditions in overlapping regions forces a receiver to switch over or to retune to another service. Now, the transient memory may be split into two or more parts and the data messages that were collected with respect to one region may be retained when collecting data messages received in another country or region.

A priority-driven storage organization may reduce the capacity needed, even down to just as much as for a single message database. Such priority may be based on the expected impediments for the traffic, such that a heavy thunderstorm would come before a moderate traffic jam, and a traffic jam would come before the advertising of a roadside fair. Other criteria for priority have been available for persons skilled in the present art. Also criteria for controlling the replacing of outdated data by newer versions have been proposed.

In decoding the messages first a message with sufficient reception quality is to be found, followed by determining what the message actually means. Due to the extremely compact coding conventions this second level needs a reference to a conversion table, which reference is being referred to relatively infrequently. Furthermore, an accurate selection must be made among various different such conversion tables.

As first waiting for the reference message and only then going to decode still later messages with the help of the associated conversion table, would effectively represent an enormous waste of time, it would be more advantageous if reliably received data messages were be stored, even if conversion thereof would not yet be possible, and to do so while keeping a sharp eye on the various conversion tables that could be signalized.

A method to allow transient storing of the data messages, in the anticipation of receiving one or more reference messages in the near future for thereby allowing to convert the data messages by the appropriate conversion table(s), according to one of the aspects of the invention is characterized by first ascertaining correct reception of a data message and then storing said message in transient storage facility means, furthermore upon correct reception of said reference message activating thereby an associated message Pool, and accessing said transient storage facility means for through one or more said referred conversion tables decoding all messages stored in said transient storage facility means with respect to said Pool, and finally thereafter decoding further data messages in said Pool without waiting for a next said reference message.

The invention also relates to an apparatus being arranged for implementing such a method. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, an elementary block diagram of the overall system;
Figure 2, an exemplary sequence of data and **T**able **ID**entifier messages from source A;
Figures 3a, 3b, the same after a changeover to another source, and back again;
Figure 4, an overall information configuration embodiment;
Figure 5, a flow chart regarding the reception start procedure;
Figure 6, a flow chart regarding the message reception procedure.

For establishing the "store and lock" feature of the present invention, data messages are decoded by using reference tables which themselves are identified through table identifiers (TID) that are inserted at the transmission side between messages. Normally, the storing and decoding of the data messages can only start after a TID will have been received. According to the present invention, data messages that have already been correctly received and thus carry a verification flag **VF=1 *before*** reception of the TID, should not be wasted. Data messages that are ready for being decoded will upon reception of the Table Identifier be provided with a so-called "identifiable" flag (IDF), so the decoding may be effected forthright. This two-step approach separates correct ***reception*** from the check on whether decoding is effectively possible.

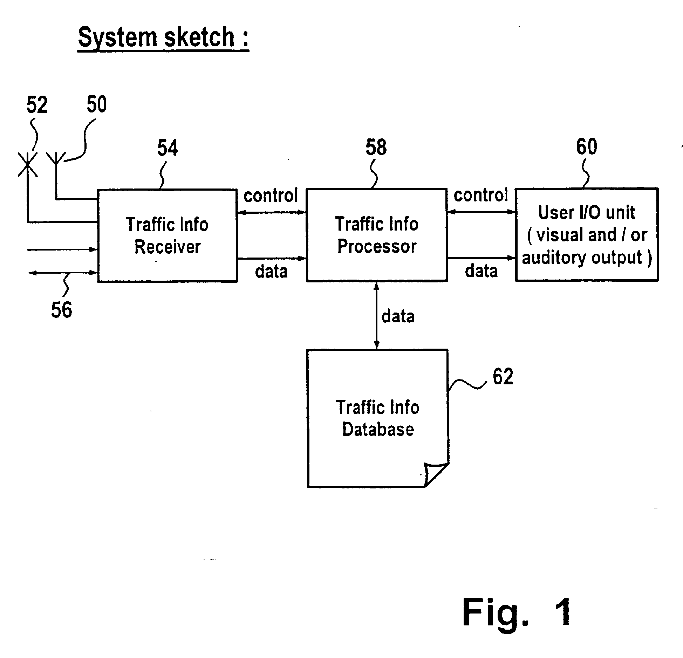

In this context, Figure 1 represents an elementary block diagram of the overall system. Module 54 is the Traffic Information Receiver that tunes to various transmitter stations for the RDS TMC information, selects for best reception, etcetera, through using antennae 50, 52. Arrows 56 indicate that such information may be received through a broadcast or bidirectional radio link, or by a broadcast or bidirectional line link. In consequence, the output consists of a sequence of messages that will be sent to the module Traffic Information Processor 58. Traffic Information Receiver 54 and Traffic Information Processor 58 will bidirectionally communicate control informations for mutual synchronization and retrocoupling. The Traffic Information Processor 58 interacts with Traffic Information Data Base Module 62 that contains various information items for the interest of the driver and the vehicle, and which may be called up through associated selection codes that are contained in the various messages received from the message source at left in the Figure. Naturally, module 58 is the Master module viz à viz Data Base Module 62. As recited supra, selected messages will be of interest to the user, and in consequence, will be forwarded to User I/O Unit 60 that outputs the messages in an appropriate form, such as visually, though a text, icon, map overlay, blinker, through audio, such as speech or bleep, or through other means that by itself donot constitute part of the present invention. Again, modules 58 and 60 will bidirectionally communicate control informations for mutual synchronization and retrocoupling. Direct vehicle control is likewise effectable.

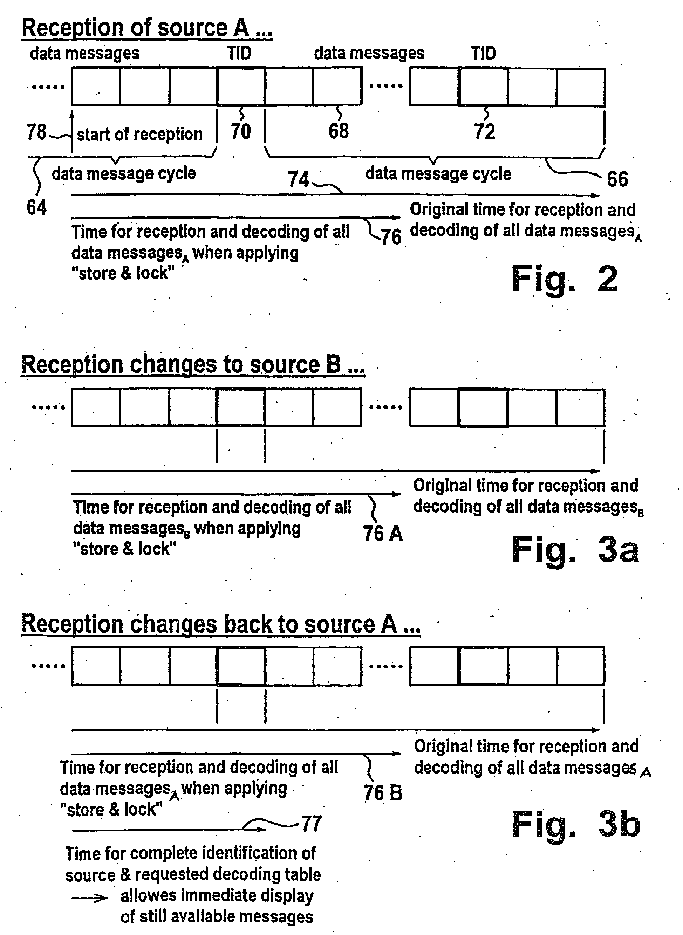

Figure 2 shows an exemplary sequence of data messages and **T**able **ID**entifier messages, with respect to a source **A**. The messages are transmitted continually, and a receiver may tune-in to a particular stream at an unpredictable instant in time 78. The messages are generated in cycles such as 64 and 66. Each cycle will contain a maximum number of messages, but from one cycle to the next, certain messages may be amended or superseded by other messages. The Table Identifier **TID** is transmitted one or more times for each cycle of messages, but always with several data messages between consecutive transmissions of the TID. Therefore, upon a start or upon a restart of the reception, it is not guaranteed that a feasible TID will have been received prior to the reception of all data messages. The instant of TID transmission, and also the content of the TID message are at the option of the transmitter. Generally, the validity of an earlier TID message terminates at the reception instant of the next TID message or in the next cycle. As shown, TID 70 is received after data message 64, and the next data message cycle starts immediately after the end of TID message 70. Standard procedures would now dictate to wait for a first TID 70 to be received, and to start decoding the subsequent data messages of cycle 66 as based on this TID. This would cause the original time for receiving and decoding of all data message to stretch from TID 70 along a complete reception cycle 66 of all data messages unto the end of arrow 74. Incidentally, a second TID message 72 is received before the end of this cycle, but this could only influence the decoding of later messages within cycle 66.

In consequence, the delay between instant 78 and the end of arrow 74 may be substantial. The present invention retains data messages that have been ***received*** in a correct manner right from the start of the reception at 78, and uses the first subsequent TID 70 for decoding these messages, so that at the end of a complete cycle after the start at the right hand end of arrow 76, all stored data messages will have become available for use. For a TID being transmitted only once during a cycle, the average speed-up is by one half of a cycle's length. If the TID is transmitted more often, the improvement is proportionally less.

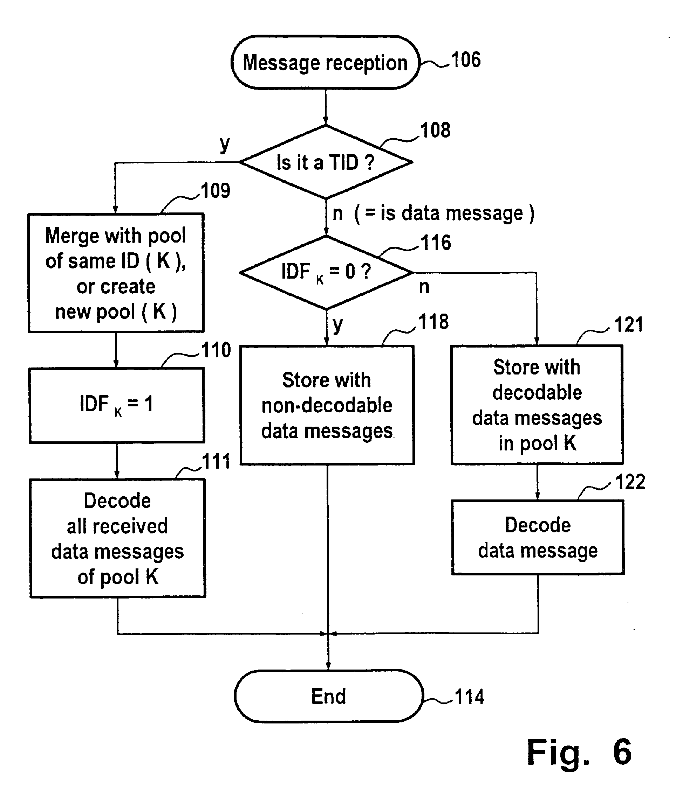

Now, if more services are relevant, these may use either a single one or a plurality of data bases, and various considerations would apply as follows:
- Each service continually identifies itself by a **service identifier SID** and basically a **program identifier PI,** independently of the carried traffic data and TID.
- There is provided at the receiver station a message storage area or **traffic information database** that is distributed into segments, which may have non-uniform or even time-variant sizes.
- Each segment's content is maintained along a set of maintenance/replacement rules, such as those being proposed by art on this field now in circulation.
- When messages from a non-identified source (PI, SID) are received, they are stored in a fresh segment of the message database. These messages will not be yet processed, because they have no link established to a decoding table DBn.
- When the message source and the appropriate Decoding Table are identified as being already kept in another segment of the message database, the new segment and the old segment with the same identifiers will be merged (109 in Figure 6).
- When the identification does not allow such merger, the segment is tagged with the new identifiers, indexed **K,** and linked to the requested decoding table **DB_{K}** if the table is available in the system (109).
- If the Decoding Table is not available in the system, the links thereto could be found by requesting their being made available. Otherwise, the system (Traffic Info Receiver) is advised to prefer instead a data source that would refer to one of the available decoding databases.
- Once all messages of a pool or segment will have become outdated, the segment in question will be deleted from the database.

Figures 3a, 3b show the same after a changeover to another source, and back again. For simplicity, the positions of the Table Identifier messages have been assumed to remain the same. The time for receiving and decoding of all data **messages_{B}** when applying "store and lock" is still given by an arrow 76B of equal length to arrow 76A.

However, due to the repeated cyclicity of the process, after jumping back to source A in Figure 3b, the time for complete identification of source and requested Decoding Table allows immediate display of still available messages at an instant corresponding to the end of arrow 77.

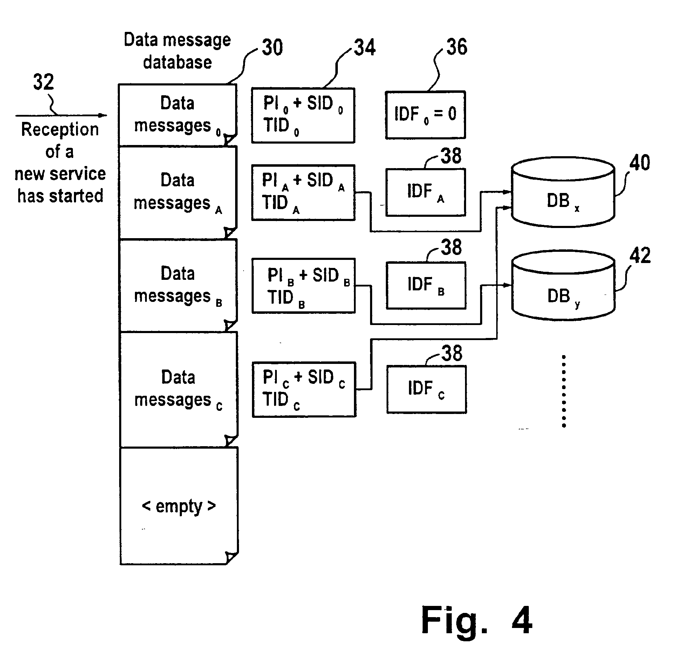

Figure 4 illustrates an overall information configuration embodiment. At left, arrow 32 represents the start of receiving a new or other service than before. Array of segments 30 represents the data message database, that as shown comprises an actual set of **data messages**₀ that is in the course of being built up, three sets of **data messages_{A}, _{B}**, _{C} that were received earlier, and an unspecified **<empty>** space. The sizes of the various segments need not be uniform or steady. The <empty> space is available for messages to be received yet. For each of the four sets or ***Pools*** of data messages in array 30, array 34 has an associated **P**ool **I**dentifier, an associated **S**ervice **ID**entifier, and **T**able **ID**entifier. For each of the four sets of data messages in array 30, array 36 has an associated **ID**entifier **F**lag, of which the first one, **IDF**₀, is still zero, whereas the others may be either "1" or "0". Under control of the various flags in column 34, the contents of the data messages of the corresponding sets in column 30 may be transferred to operating storage, **DBx, Dby,** ...., either as an autonomous entity 42 for **data messages_{B},** or as a shared entity 40 between **data messages** _{A,C}. In this manner the messages of various services may be made available for user presentation or otherwise.

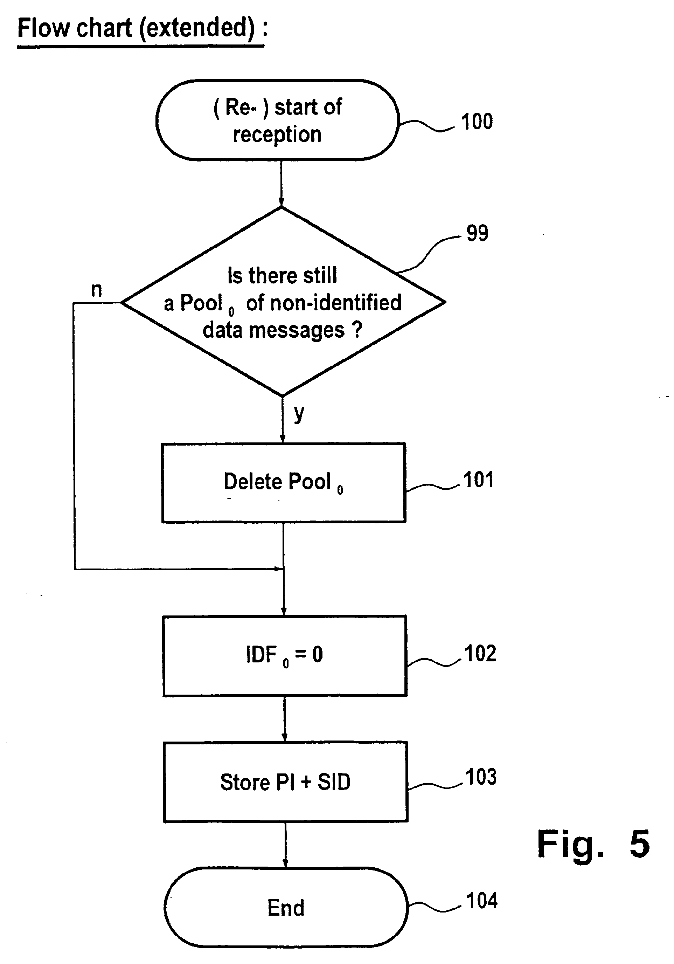

Figure 5 is a flow chart representing the **reception start** procedure. First, the effectivity of the start or restart is detected in block 100; the representation of the start signalization may be a header item, an information that is distributed over a longer interval than corresponding to a single message, in a particular selected frequency band, or other. For further simplicity, no waiting loop has been shown. Next, in block 99 there is detected whether there still exists a ***pool,*** in this case **Pool**₀ that is made up of data messages that have not yet been identified for converting to a user-applicable datum. If so, in block 101 this **Pool**₀ is deleted or otherwise made inconsequential. Next, in block 102 the ***identifyable*** flag **IDF** is reset to zero. Next in block 103, from the new messages received at 100, the **P**rogramme **I**dentifier and the **S**ervice **ID**entifier are stored. These come as some pre-agreed bit codes. In block 104, the Reception Start Procedure is terminated.

Figure 6 is a flow chart representing the **message reception** procedure proper. First, in block 106 the actual reception of a message is detected; as before, no waiting loop arrangement has been shown. In block 108, it is checked whether the message in question regards a TID. If negative, the message is obviously a data message, and the system goes to block 116, where it is checked whether a TID had been received earlier and furthermore its Pool identifier K: **IDF_{K}=1.** If negative **(IDF_{K}=0),** in block 118 the message in question is stored with any other as yet non-decodable data messages in an appropriate storage space. Next, in block 114, the procedure is terminated, and the system goes again waiting for any further message to arrive in block 106, or for a new reception starting to occur, block 100 in Figure 5. If in block 108 a TID message was found to arrive, and to contain an Identifier **ID(K),** this is used to create a new pool**(K):** Pool_{K}, or if a pool for this Table did exist already, to merge the Table newly identified with the one that already existed. Next, the flag **IDF_{K}** is set to "1", and the storage space supra in block 111 is accessed for retrieving and decoding all stored and as yet undecoded messages from **Pool_{K},** whereupon the system again proceeds to block 114. If in block 116 the flag **IDF_{K}** was found to be "1" however, in block 121 the new message is stored transiently with **Pool_{K}** in the storage space referred to above, and is subsequently decoded in block 122, such as according to its order of arrival as in a FIFO facility. Then, the system again proceeds to block 114.

The several different message streams from different service providers, such as one service for traffic conditions, one for weather circumstances, and still another for wayside facilities, are not linked to each other and may therefore have independent transfer parameters and conditions. As shown, they may be decoded by a single shared decoding table, or by various individual decoding tables. This allows to use either the same TID or different TIDs.

## Claims

1. A method for processing cycles of messages (64, 66) in a Radio Data System Traffic Message Coding message environment, wherein each cycle (64, 66) contains one or more data messages that may correspond to those contained in contiguous cycles, and each of said cycles (64, 66) contains one or more reference messages (72) that refer to a conversion table for converting each message of one of said cycles to a respectively associated user signalization datum, said method being **characterized by** first ascertaining correct reception of a data message, wherein said data message is received prior to any reference message that refers to a conversion table for converting said data message, and then storing said data message in transient storage means, furthermore, upon correct reception of the first reference message subsequent to said data message and which refers to said conversion table for converting said data message, accessing said transient storage means for converting said data message using the said conversion table to which said subsequently received reference message refers, and
thereafter converting subsequent correctly received data messages using said conversion table without waiting for the next reference message.

2. A method as claimed in Claim 1, **characterized by** resetting an indicator upon detecting a reception start of any said cycle (64, 66), and setting said indicator upon detecting reception of said reference message (70, 72), therewith enabling said conversion

3. A method as claimed in Claim 1, **characterized in that** said transient storage facility means is FIFO-based.

4. An apparatus arranged for implementing a method as claimed in Claim 1 for processing cycles (64, 66) of messages in a Radio Data System Traffic Message Coding message environment wherein each cycle (64, 66) contains one or more data messages that may correspond to those contained in contiguous cycles, and each of said cycles (64, 66) contains one or more reference messages (72) that refer to a conversion table for converting each message of one of said cycles to a respectively associated user signalization datum being **characterized by** being adapted to first ascertaining correct reception of a data message, wherein said data message is received prior to any reference message that refers to a conversion table for converting said data message, and then storing said data message in transient storage means, furthermore, upon correct reception of the first reference message subsequent to said data message and which refers to said conversion table for converting said data message, accessing said transient storage means for converting said data message using the said conversion table to which said subsequently received reference message refers, and
thereafter converting subsequent correctly received data messages using said conversion table without waiting for the next reference message.

## Patentansprüche

1. Verfahren zur Bearbeitung von Nachrichtenzyklen (64, 66) in einer Nachrichtenumgebung der Funkdatensystem-Verkehrsnachrichtencodierung, wobei jeder Zyklus (64, 66) eine oder mehrere Datennachrichten enthält, die den in zusammenhängenden Zyklen enthaltenen entsprechen können, und jeder dieser Zyklen (64, 66) eine oder mehrere Bezugsnachrichten (72) enthält, die sich auf eine Umrechnungstabelle zum Umrechnen jeder Nachricht eines dieser Zyklen in ein jeweils zugeordnetes Benutzersignalisierungsdatum beziehen, wobei dieses Verfahren **gekennzeichnet ist durch** Ermitteln als erstes des richtigen Empfangs einer Datennachricht, wobei diese Datennachricht vor jeder Bezugsnachricht empfangen wird, die sich auf eine Umrechnungstabelle zum Umrechnen dieser Datennachricht bezieht, und dann Speichern dieser Datennachricht in Zwischenspeichermitteln, weiterhin bei richtigem Empfang der ersten Bezugsnachricht nach der Datennachricht, und die sich auf die Umrechnungstabelle zum Umrechnen der Datennachricht bezieht, Zugreifen auf die Zwischenspeichermittel zum Umrechnen der Datennachricht unter Verwendung der Umrechnungstabelle, auf die sich die danach empfangene Bezugsnachricht bezieht, und danach Umrechnen nachfolgender richtig empfangener Datennachrichten unter Verwendung der Umrechnungstabelle, ohne auf die nächste Bezugsnachricht zu warten.

2. Verfahren nach Anspruch 1, **gekennzeichnet durch** Rücksetzen eines Anzeigers bei Erkennen eines Empfangsbeginns eines beliebigen besagten Zyklus (64, 66) und Setzen des Anzeigers bei Erkennen des Empfangs der Bezugsnachricht (70, 72), und **dadurch** Freigeben der Umrechnung.

3. Verfahren nach Anspruch 1, **dadurch gekennzeichnet, daß** das Zwischenspeichereinrichtungsmittel FIFO-basiert ist.

4. Einrichtung ausgeführt zum Implementieren eines Verfahrens nach Anspruch 1 zum Bearbeiten von Zyklen (64, 66) von Nachrichten in einer Nachrichtenumgebung der Funkdatensystem-Verkehrsnachrichtencodierung, wobei jeder Zyklus (64, 66) eine oder mehrere Datennachrichten enthält, die den in zusammenhängenden Zyklen enthaltenen entsprechen können, und jeder dieser Zyklen (64, 66) eine oder mehrere Bezugsnachrichten (72) enthält, die sich auf eine Umrechnungstabelle zum Umrechnen jeder Nachricht eines dieser Zyklen in ein jeweils zugeordnetes Benutzersignalisierungsdatumbeziehen, **dadurch gekennzeichnet, daß** sie eingerichtet ist zum Ermitteln als erstes des richtigen Empfangs einer Datennachricht, wobei diese Datennachricht vor jeder Bezugsnachricht empfangen wird, die sich auf eine Umrechnungstabelle zum Umrechnen dieser Datennachricht bezieht, und dann Speichern dieser Datennachricht in Zwischenspeichermitteln, weiterhin bei richtigem Empfang der ersten Bezugsnachricht nach der Datennachricht, und die sich auf die Umrechnungstabelle zum Umrechnen der Datennachricht bezieht, Zugreifen auf die Zwischenspeichermittel zum Umrechnen der Datennachricht unter Verwendung der Umrechnungstabelle, auf die sich die danach empfangene Bezugsnachricht bezieht, und danach Umrechnen nachfolgender richtig empfangener Datennachrichten unter Verwendung der Umrechnungstabelle, ohne auf die nächste Bezugsnachricht zu warten.

## Revendications

1. Procédé de traitement de cycles de messages (64, 66) dans un environnement de messages de Codage de Messages de Trafic dans un Système de Radiocommunication de Données, dans lequel chaque cycle (64, 66) contient un ou plusieurs messages de données qui peuvent correspondre à ceux contenus dans des cycles contigus, et chacun desdits cycles (64, 66) contient un ou plusieurs messages de référence (72) qui font référence à une table de conversion pour convertir chaque message de l'un desdits cycles en une donnée de signalisation d'utilisateur respectivement associé, ledit procédé étant **caractérisé par** d'abord l'assurance de la réception correcte d'un message de données, dans lequel ledit message de données est reçu avant un quelconque message de référence qui fait référence à une table de conversion pour convertir ledit message de données, et ensuite le stockage dudit message de données dans un moyen de stockage transitoire, de plus, à la réception correcte du premier message de référence subséquent audit message de données et qui fait référence à ladite table de conversion pour convertir ledit message de données, l'accès audit moyen de stockage transitoire pour convertir ledit message de données en utilisant ladite table de conversion à laquelle ledit message de référence subséquemment reçu fait référence, et
ensuite la conversion des messages de données subséquents correctement reçus en utilisant ladite table de conversion sans attendre le message de référence suivant.

2. Procédé selon la revendication 1, **caractérisé par** la réinitialisation d'un indicateur à la détection du début d'une réception d'un quelconque dit cycle (64, 66), et le paramétrage dudit indicateur à la détection de la réception dudit message de référence (70, 72), permettant ainsi ladite conversion.

3. Procédé selon la revendication 1, **caractérisé en ce que** ledit moyen de facilité de stockage transitoire est sur une base FIFO.

4. Appareil agencé pour la mise en oeuvre d'un procédé selon la revendication 1 de traitement de cycles (64, 66) de messages dans un environnement de messages de Codage de Messages de Trafic dans un Système de Radiocommunication de Données dans lequel chaque cycle (64, 66) contient un ou plusieurs messages de données qui peuvent correspondre à ceux contenus dans des cycles contigus, et chacun desdits cycles (64, 66) contient un ou plusieurs messages de référence (72) qui font référence à une table de conversion pour convertir chaque message de l'un desdits cycles en une donnée de signalisation d'utilisateur respectivement associé, étant **caractérisé par le fait qu'**il est adapté pour d'abord s'assurer de la réception correcte d'un message de données, dans lequel ledit message de données est reçu avant un quelconque message de référence qui fait référence à une table de conversion pour convertir ledit message de données, et ensuite pour stocker ledit message de données dans un moyen de stockage transitoire, de plus, à la réception correcte du premier message de référence subséquent audit message de données et qui fait référence à ladite table de conversion pour convertir ledit message de données, pour accéder audit moyen de stockage transitoire pour convertir ledit message de données en utilisant ladite table de conversion à laquelle ledit message de référence subséquemment reçu fait référence, et
ensuite pour convertir des messages de données subséquents correctement reçus en utilisant ladite table de conversion sans attendre le message de référence suivant.
